# EUROPEAN PATENT APPLICATION

(11) **EP 2 680 466 A1**
(43) Date of publication of application: **01.01.2014**
(21) Application number: 12173562.5
(22) Date of filing: 26.06.2012
(51) Int. Cl.: H04J 3/06

(54) **Low latency transparent clock**

(71) Applicant: ABB Research Ltd., 8050 Zürich (CH)
(72) Inventor: Honegger, Claudio, 8636 Wald (CH); Kirrmann, Hubert, 5405 Dättwil (CH)
(74) Representative: ABB Patent Attorneys

(57) **Abstract**

The present invention is concerned with synchronizing clocks within a communication network. Specifically, the present invention relates to a method and a bridging node (2) for handling a synchronization frame (1,21,22) using said bridging node (2) comprising two or more ports (3,4,5,6) connected to a communication network of an industrial process control system, in particular of a substation automation system. In particular, a method for handling a synchronization frame (1,21,22) producing a receive-time stamp (13) indicative of a receiving time of the synchronization frame (1,21,22) at a first port (3) of the bridging node (2), adding a receive-time stamp information in front of a header (31) of the synchronization frame (1,21,22), and forwarding of the synchronization frame (1,21,22) to a second port (4) of the bridging node (4).

## Description

### FIELD OF THE INVENTION

The invention relates to the field of synchronizing clocks within a communication network of an industrial process control system, in particular of a substation automation system. Specifically, the present invention relates to a method of and a bridging node for handling synchronization frames.

### BACKGROUND OF THE INVENTION

In communication networks precise timing is crucial for operation. As networks grow in size and include more and more devices synchronization of clocks throughout the network is increasingly difficult. In state of the art precision time protocols (PTP) such as IEEE 1588 or IEEE 802.1AS a grandmaster clock MC may be connected to a GPS receiver (GPS: Global Positioning System), such that the grandmaster clock MC may be synchronized with an accurate time from one or more GPS satellites. According to these protocols, synchronization frames are distributed throughout the network to set ordinary, or slave, clocks according to a reference time information or timestamp from the grandmaster clock.

The original reference time information needs to be corrected for propagation delays incurred during propagation of the synchronization frames between two neighboring nodes of the network, as well as for residence delays incurred while processing synchronization frames at the nodes. Specifically, IEE1588-2008 introduces a transparent clock associated with network nodes or devices used to convey precision time protocol messages. The transparent clock modifies precision time protocol messages as they pass through the device by overwriting time delay correction fields within the message. To this purpose, timing information is needed including a point in time the message is received by the network device (receive-time), time spent within the network device from receiving to sending (residence time), and a point in time the message is sent (send-time) to the neighbor node.

Accordingly the network device needs to store timing information including the receive-time, propagation delay, residence time and send-time in order to determine a correction to the original time information. A physical buffer of the network device is generally used for storing. Furthermore, information on the message needs to be stored in order to relate the timing information with the respective message at the time of correcting the original timing information and sending the message. Thus, a large overhead including extensive memory and protocols is generally needed to correct the original timing information according to IEE1588-2008.

In the patent application WO 2007/098775 an improvement to the described standard is suggested, where the network device generates a receive-time upon reception of a message which is relevant to synchronization and inserts the receive-time into or appends the receive-time to the received message. The method according to WO 2007/098775 uses an unused part or a part of the message reserved for other information for the insertion of the receive-time information.

However, the suggested improvement is only minor as the handling of PTP messages involves unnecessary delays. While sending the message screening of the message for the information necessary to correct the timestamp within the message is needed. Thus, at sending the timing information still needs to be stored temporarily in a physical buffer. The use of a physical buffer raises costs of synchronization.

Furthermore, the method is time intensive as the message needs to be screened, the timing information read and stored, time correction calculated, and inserted in the message. In addition, the method cannot be carried out while the message is sent, also known in the art as messaging on the fly. This results in limited capability to speed up the method.

### DESCRIPTION OF THE INVENTION

It is therefore an objective of the invention to streamline the process of network synchronization in a communication network of an industrial process control system, in particular a substation automation system. This objective is achieved by a method of handling synchronization frames and a bridging node according to the independent claims. Preferred embodiments are evident from the dependent patent claims, wherein the claim dependency shall not be construed as excluding further meaningful claim combinations.

According to the invention, a precision time protocol message is sent as a time synchronization frame including a reference time to be distributed within a communication network of an industrial process control system, in particular a substation automation system. A bridging node within the communication network comprises two or more ports connected to the network, wherein the bridging node sends and receives messages in general and in particular synchronization frames. When the bridging node receives the synchronization frame a receive time stamp indicative of the receive time at a receiving port of the bridging node is produced. First time-correction information including the receive time stamp is then written to, and stored in, a field of the synchronization frame such as a preamble that time- and execution-wise precedes a header field of the received synchronization frame. In other words, the first time-correction information is prepended or added to a beginning of the synchronization frame as marked by a header of the synchronization frame. Subsequently, the synchronization frame including the first time-correction information is forwarded to a second port of the bridging node for further handling and sending to a neighbour node or device within the network.

As opposed to the WO 2007/098775, the present invention does not require unspecified "unused" fields located at unknown positions within the frame, but prepends the receive time information in a field originally used by a preamble of the received frame. This specific location enables subsequent on-the-fly manipulation of the synchronization frame at the second port of the bridging node, which ultimately reduces the need for intermediate storage memory at the second port and lowers processing time. Specifically, synchronization frames including the first time-correction information may be forwarded to a plurality of second, or send, ports of the bridging node.

In an advantageous embodiment of the invention, a propagation delay between a send-node that the synchronization frame originated from and the bridging node receiving the synchronization frame is included in the first time-correction information. In particular, the propagation delay may be appended to or concatenated with the receive-time stamp. Thus the relevant propagation delay is forwarded together with the receive time information only to those second ports that will actually further handle the synchronization frame, and the propagation delay need not be distributed upfront to all potential send ports of the node.

In a further refined embodiment of the invention, the first time correction information is indicative of a difference of the propagation delay and the receive time stamp. Accordingly, some of the time correction effort is assigned to the first port, and less space is needed in the synchronization frame.

According to this embodiment, a send-time stamp is produced indicative of a send time of the synchronization frame from the second port of the bridging node. Second time correction information is calculated by summing (i) prior time correction information retrieved from, and previously stored at, a reference time correction field of the received synchronization frame, (ii) the first time correction information, i.e. the difference of the propagation delay and the receive time stamp, and (iii) the send time stamp. Accordingly, fewer calculations are due at the second port at send time, further benefitting an on-the-fly processing of the outgoing frame.

The present invention also relates to a bridging node with two or more ports connected to a communication network of an industrial process control system, in particular of a substation automation system, for receiving and sending a synchronization frame. The bridging node is adapted to produce a receive time stamp indicative of a receive time of the synchronization frame at a first port of the node, to calculate a first time correction information, and to write or store the latter in a correction field of the synchronization frame. The first time correction information is calculated as a sum of (i) a prior time correction information retrieved from the correction field of the received synchronization frame, and (ii) the difference of a send-to-bridging node propagation delay and the receive time stamp. Accordingly, some of the time correction update calculations are executed at the time of receiving the synchronization frame, and fewer calculations are due at the time of sending the synchronization frame by at least one second port of the bridging node, further benefitting on-the-fly processing of the outgoing frame.

### BRIEF DESCRIPTION OF THE DRAWINGS

The subject matter of the invention will be explained in more detail in the following text with reference to preferred exemplary embodiments which are illustrated in the attached drawings, in which:
- Fig.1: schematically shows a bridging node comprised of four ports for handling a synchronization frame;
- Fig.2: shows parts of an incoming synchronization frame;
- Fig.3: shows parts of a modified synchronization frame; and
- Fig.4: shows parts of an outgoing synchronization frame.

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

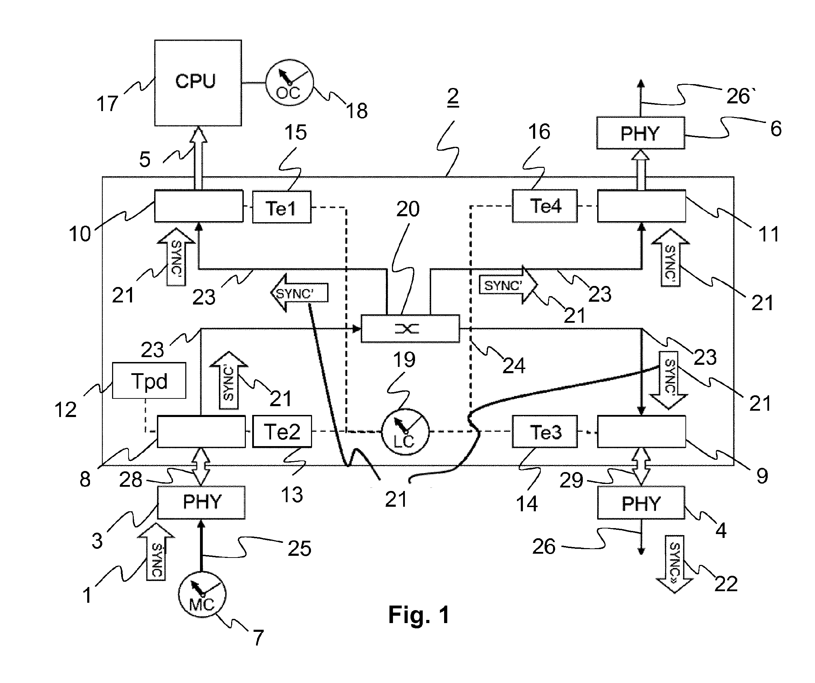

Fig.1 shows schematically handling of a synchronization frame 1, 21, 22 using a bridging node 2 according to the invention. The bridging node is comprised of four ports 3,4,5,6, wherein by way of example a first port 3 receives an incoming synchronization frame 1. However, one skilled in the art will understand that any other node 3,4,5,6 may receive an incoming synchronization frame 1 and one skilled in the art will apply necessary changes to the method laid out hereinafter. The incoming synchronization frame 1 is sent by a master clock 7 via a time route 25 and carries timing information for synchronization of clocks throughout the network, in particular slave clocks such as the processor clock 18.

After receiving the incoming synchronization frame 1 the first node 3 transfers the incoming synchronization frame 1 via a frame exchange 28 to a programmable array 8. Subsequently, the programmable array 8 modifies the incoming synchronization frame 1, wherein a receive-time stamp 13 taken from an internal clock 19 of the bridging node 2 is then written preferably to the beginning of the synchronization frame 1, 21, 22, in particular before a header field 31 of the synchronization frame 1, 21, 22. In an alternative embodiment of the invention the receive time stamp 13 is stored in a correction field 32 of the synchronization frame 1, 21, 22.

The modified synchronization frame 21 is then forwarded via an internal frame route 23 to other nodes 4, 5, 6 of the bridging node 2 using the forwarding unit 20. For further processing, the modified synchronization frame 21 is received by respective programmable arrays 9, 10, 11 at the nodes 4, 5, 6.

By way of example a second port 4 of the bridging node 2 is used for further processing and forwarding an outgoing synchronization frame 22. However, one skilled in the art will understand that any other node 3, 4, 5, 6 may process and forward the outgoing synchronization frame 22 and one skilled in the art will apply necessary changes to the method laid out hereinafter.

The programmable array 9 fetches a send-time stamp 14 via a time route 24 from the internal clock 19 of the bridging node 2. Subsequently, the programmable array 9 calculates a first time correction information 34 as the sum of a prior time correction information 33 from the received synchronization frame 1, the send-time stamp 14, and the difference of the propagation delay 12 and the receive time-stamp 13. Subsequently, the prior time correction information 33 is further stored in the correction field 32 of the outgoing synchronization frame 22. Finally, the programmable array 9 forwards the outgoing synchronization frame 22 to said second node 4 for transmitting said outgoing synchronization frame 22 to a next node or a device within the communication network.

Alternatively, the programmable array 9 sends the synchronization frame without modifications to the incoming synchronization frame 1 and removing modifications made by the bridging node 2 where necessary. Subsequently, the programmable array 9 generates a follow-up message including the residence time and the propagation delay 12 and further transmits the follow-up message to a next node or a device within the communication network.

Additionally, the bridging node 2 can send an outgoing synchronization frame 22 via any other port 5, 6 in addition to the outgoing synchronization frame 22 sent by the second node 4 using the forwarding time 15, 16 at the respective node 5, 6. In this way synchronization via multiple outgoing routes 26, 26' is possible.

Furthermore, the bridging node may send an outgoing synchronization frame 22 to a device, e.g. a computer processor 17, connected by example via a fourth port 5 in order to synchronize the processor clock 18.

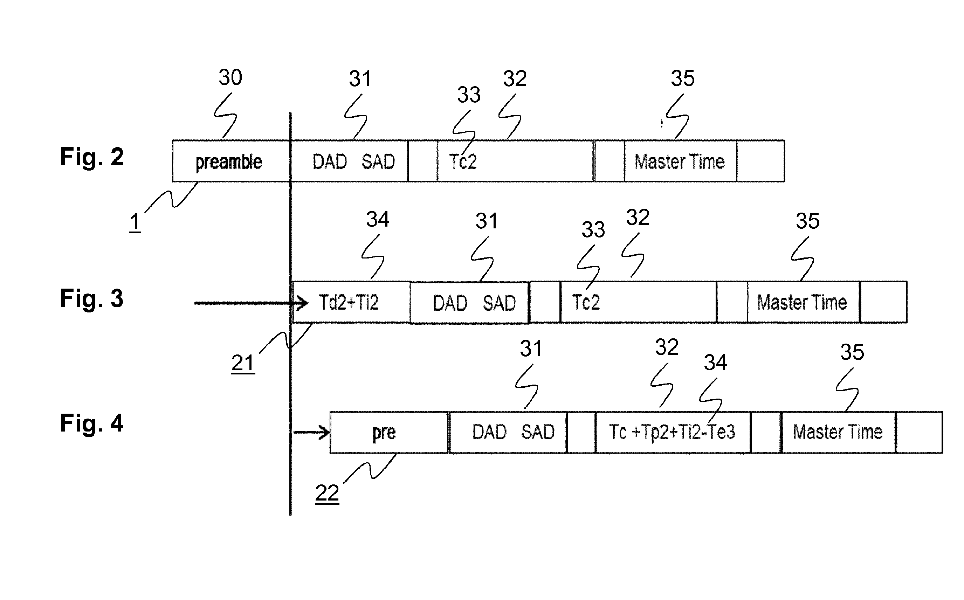

Fig.2 shows part of said incoming synchronization frame 1 comprising a preamble 30, a header field 31, a correction frame 32 with a prior time correction information 33, and an master clock time 35 from the master clock 7. After receiving said incoming synchronization frame 1 by the bridging node 2 the preamble 30 is stripped of for further processing.

Fig.3 shows parts of the modified synchronization frame 21, wherein said receive-time stamp 13 is written to the beginning of the modified synchronization frame 21, in particular before a header field 31 of the modified synchronization frame 21.

Fig. 4 shows parts of the outgoing synchronization frame 22, wherein the time correction information 34 is removed and a message preamble according to the precision time protocol is appended before the header field 31. The time correction information 34 is calculated as the sum of prior time correction information 33, the send-time stamp 14, and the difference of the propagation delay 12 and the receive-time stamp 13 and subsequently written to the correction field 32.

### LIST OF DESIGNATIONS

- 1: Incoming synchronization frame
- 2: Bridging node
- 3: First Port
- 4: Second Port
- 5: Third Port
- 6: Fourth Port
- 7: Master clock
- 8: Programmable array
- 9: Programmable array
- 10: Programmable array
- 11: Programmable array
- 12: Propagation delay time
- 13: Receive-time stamp
- 14: Send-time stamp
- 15: Forwarding time stamp
- 16: Forwarding time stamp
- 17: Computer processor
- 18: Processor clock
- 19: Internal clock
- 20: Internal forwarding unit
- 21: Modified synchronization frame
- 22: Outgoing synchronization frame
- 23: Frame route
- 24: Time route
- 25: Incoming route
- 26: Outgoing route
- 26': Outgoing route
- 27: Frame exchange
- 28: Frame exchange
- 29: Frame exchange
- 30: Preamble
- 31: Header field
- 32: Correction field
- 33: Prior time correction information
- 34: Time correction information
- 35: Master clock time

## Claims

1. A method of handling a synchronization frame (1, 21, 22) in a bridging node (2) with two ports (3,4,5,6) connected to a communication network of an industrial process control system, in particular of a substation automation system, comprising
- producing a receive time stamp (13) indicative of a receive time of a received synchronization frame (1, 21, 22) at a first port (3) of the bridging node (2),
- writing first time-correction information including the receive time stamp (13) to a field of the synchronization frame that precedes a header field (31) of the received synchronization frame, and
- forwarding the synchronization frame (1, 21, 22) to a second port (4) of the bridging node.

2. The method according to claim 1 wherein the first time-correction information includes a propagation delay (12) between a send-node of the synchronization frame (1, 21, 22) and the bridging node (2).

3. The method according to claim 2 wherein the first time correction information is indicative of a difference of the propagation delay (12) and the receive-time stamp (13).

4. The method according to claim 3 comprising
- producing a send time stamp (14) indicative of a send time of the synchronization frame (1, 21, 22) from the second port (4) of the bridging node (2), and
- calculating second time correction information (34) by summing
(i) a prior time correction information (33) retrieved from a correction field of the received synchronization frame,
(ii) the first time correction information (34), and
(iii) the send time stamp (14).

5. The method according to claim 4, comprising
- writing the second time correction information (34) in the correction field (32) of the synchronization frame (1, 21, 22), or
- generating and transmitting a follow-up frame including second time correction information (34).

6. The method according to any of the claims 1 to 5 comprising said bridging node (2) acting as a transparent clock according to the precision time protocol IEEE 1588.

7. A bridging node (2) comprising two ports (3,4,5,6) adapted to be connected to a communication network of an industrial process control system, in particular of a substation automation system, the bridging node (2) being adapted to
- produce a receive time stamp (13) indicative of a receive time of a received synchronization frame (1,21,22) at a first port (3) of the bridging node (2),
- calculate first time correction information (34) by summing
(i) a prior time correction information (33) retrieved from a correction field of the received synchronization frame, and
(ii) the difference of a propagation delay (12) between a send-node of the synchronization frame (1, 21, 22) and the bridging node (2) and the receive time stamp (13),
- write the first time correction information for further processing in the correction field (32) of the synchronization frame (1,21,22), and
- forward the synchronization frame to a second port (4) of the bridging node (2).

8. The bridging node according to claim 7, **characterized in that** it is adapted to
- produce a send time stamp (14) at the second port (4) indicative of a send time of the frame,
- calculate second time correction information (34) by summing the prior time correction information (33) and send time stamp (14), and
- write the second time correction information (34) in the correction field (32) of the synchronization frame (1, 21, 22).
